# EUROPEAN PATENT APPLICATION

(11) **EP 0 856 844 A1**
(43) Date of publication of application: **05.08.1998**
(21) Application number: 98101688.4
(22) Date of filing: 31.01.1998
(51) Int. Cl.: G11B 17/22, G11B 15/68

(54) **Device for locking and releasing interchangeable magazines loaded into a recording/playback apparatus**

(30) Priority: 04.02.1997 DE 19704033
(71) Applicant: EASTMAN KODAK COMPANY, Rochester, New York 14650 (US)
(72) Inventor: Freund, Michael, 70323 Stuttgart (DE); Litsche, Mario, 70323 Stuttgart (DE)
(74) Representative: Lewandowsky, Klaus, Dipl.-Ing.

(57) **Abstract**

The invention relates to a device (1) with means (10, 11) for locking and releasing at least one interchangeable magazine (3) loaded into a holding compartment (2) of a loading/unloading section of a recording/playback apparatus, and for jointly releasing and locking several removable information carriers (CD) held in the interchangeable magazine during locking and releasing of the interchangeable magazine, whereby the loading/unloading section can be closed by a door (4) on the device housing. In order to obtain a device which, on the one hand, permits simple manual loading and unloading of the interchangeable magazine without great force with simultaneous exact positioning of the magazine in the apparatus and, on the other hand, prevents undesired releasing of the information carrier in a magazine during its loading/unloading into/from the apparatus even in the event of considerable impact forces, the means (10, 11) for locking and releasing the interchangeable magazine (3) inserted into the loading/unloading section and the information carrier (CD) held in the interchangeable magazine and the means (10) for positioning the magazine are in operative connection with the housing door (4) and can be engaged with and disengaged from the magazine by an opening and closing movement of the housing door. The means (10, 11) for locking, releasing and positioning are disengaged from the interchangeable magazine (3) inserted into the loading/unloading section when the housing door (4) is in a final open position or is partially open.

## Description

The invention relates to a device with means for locking and releasing at least one interchangeable magazine loaded into a holding compartment of a loading/unloading section of a recording/playback apparatus and for jointly releasing and locking at least one removable information carrier held in the interchangeable magazine during the locking and releasing of the interchangeable magazine, whereby the loading/unloading section can be closed by a housing door on the apparatus.

EP-A-0 709 840 discloses a device of the generic type for locking and releasing interchangeable magazines and their information carriers, said device forming part of a recording/playback or archiving apparatus for information carriers in the form of floppy disks. The locking device comprises two interconnected leaf spring elements in at least one of the two side walls or magazine guides of the corresponding magazine holding compartments, said locking device comprising, on the one hand, sawtooth-shaped ramp elements protruding into the magazine holding compartments for locking/releasing the magazine in the apparatus and, on the other hand, leg elements protruding into the magazine holding compartments for shifting spring-loaded locking means in the magazine for jointly releasing/locking the floppy disks, the locking of the magazine and the releasing of the information carrier taking place during the manual pushing of the magazine into the magazine holding compartment. In order to release or remove the magazine, the housing door has to be opened and a release lever or slide on the leaf spring element shifted manually sideways towards the outside of the magazine compartment against the force of the leaf spring element, and at the same time the magazine has to be removed from the magazine compartment in order to lock the information carrier with the magazine.

This locking device is disadvantageous in that a relatively large force is required in order to manually push the magazine into the apparatus, as a result of which it is difficult to determine whether the magazine is in the desired end position up against the end stop in the magazine holding compartment. Furthermore, removal of the magazine requires an additional manual unlocking of the magazine with a relatively large force and a simultaneous removal of the magazine. Furthermore, forceful pushing of the magazine into the apparatus up against the end stop causes large impact forces to be exerted on the information carrier so that the information carriers which are released at this moment slip or can slip out of the magazine.

Therefore, it is the object of the invention to create a device of the generic type which, on the one hand, allows the magazine to be manually inserted in a simple manner and removed without great force while at the same time being exactly positioned in the apparatus, and on the other hand prevents the information carrier in a magazine from being inadvertently released during its loading/unloading into/from the apparatus, even if subjected to considerable impact forces, and which guarantees reliable functioning in an automated environment.

In accordance with the invention, this object is attained using a device according to Claim 1 in that the means for locking and releasing the interchangeable magazine inserted into the loading/unloading section and the information carriers contained in the interchangeable magazine are in operative connection with the housing door and can be brought into and out of engagement by a closing and opening movement of said door.

Advantageously, means for positioning the interchangeable magazine are provided which can be actuated by the closing and opening movement of the housing door, and the means for locking, releasing and positioning are not in engagement with the interchangeable magazine inserted into the loading/unloading section when the door of the housing is in an open end position or is partially open.

Another advantage is that the positioning means of the magazine and the releasing means of the information carrier form an integral component of the magazine locking/releasing means and that the means for locking, releasing and positioning are jointly linked to the housing door by a single crank drive and are jointly actuable.

Other features and advantages can be inferred from the desciption of the embodiments of the invention illustrated in the drawing and from the further sub-claims.

The drawing shows in
- Fig. 1: a partial view and a three-dimensional side view of the locking device according to the invention, with locking/releasing means laterally protruding into magazine holding compartments through a side wall limiting said compartments, said means being in in a magazine locking position and an information carrier releasing position with a single loaded interchangeable magazine being shown schematically,
- Fig. 2: the device according to Fig. 1 with the locking/releasing means being depicted in a partial view and a three-dimensional side view from a rear side of the limiting side wall,
- Fig. 3: a crank drive for the locking/releasing means of the device shown in Figs. 1 and 2 in a three-dimensional top view and in a closed end position according to Figs. 1 and 2.
- Fig. 4: the device according to Figs. 1 - 3 in a partial top view, with the locking/releasing means and a housing door being in an open end position.
- Fig. 5: the device according to Fig. 4 in a partial view and in a partly open top view, the locking/releasing means and the housing door of the apparatus being in a position before the final closing position, with the interchangeable magazine with a drawer for the information carrier being inserted, and
- Fig. 6: the device according to Fig. 4 in a partial view and in a partly open top view, the locking/releasing means being in their locking/releasing positions according to Figs. 1 and 2 and the housing door of the apparatus being in its final closing position, with the interchangeable magazine with a drawer for the information carrier being inserted.

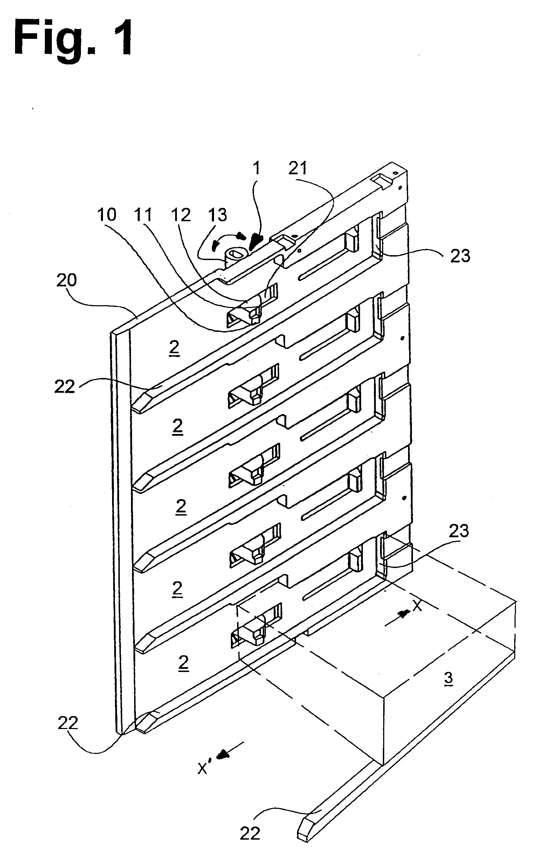

The following description based on Figs. 1 to 6 relates to a preferred embodiment of the device 1 according to the invention, said device having means 10, 11 for locking and releasing one or more interchangeable magazines 3 loaded into holding compartments 2 of a loading/unloading section of a recording/playback apparatus, and for jointly releasing and locking one or more removable information carriers (CD) held in the interchangeable magazine 3 during the locking and releasing of said magazine, the loading/unloading section of the apparatus and of the holding compartments 2 being closable by a door 4 of the apparatus.

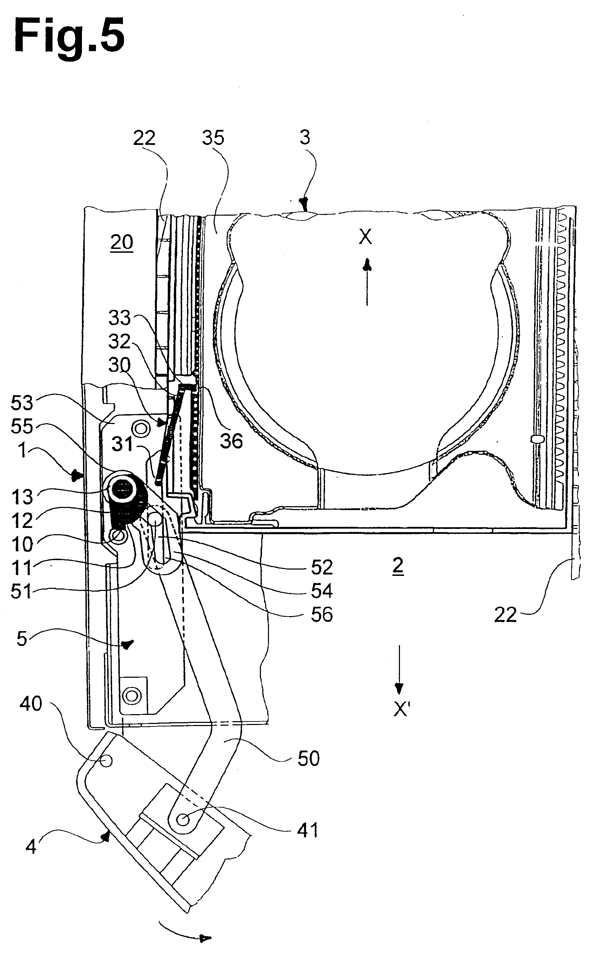

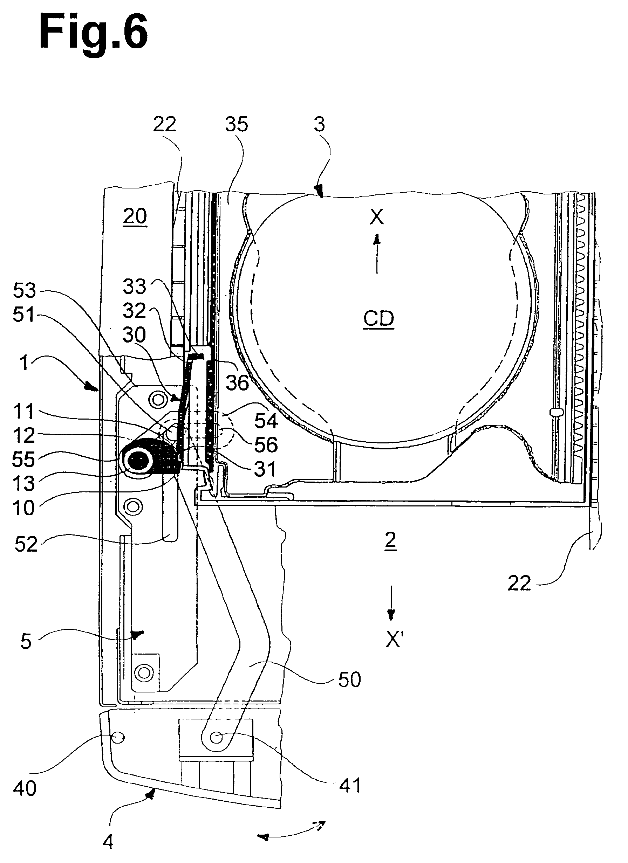

The device 1 is used in a prior-art recording/playback apparatus not shown, e. g. an archiving apparatus or disk changer, and the information carriers are preferably designed as compact discs (CD) without protective sleeves and stored in several drawers 35 or disc holders which are arranged one on top of the other and can be extended and retracted in the interchangeable magazine(s) (see Figs. 5 and 6).

For a person skilled in the art, it is self-explanatory that the device according to the invention can also be used in apparatus for information carriers in the form of compact discs (CD) with protective sleeves, magneto-optical discs (MO), floppy disks (FD) or music cassettes (MC), the information carriers without drawers 35 or disc holders also being adapted for arrangement alongside one another in the interchangeable magazine(s) 3. It is also self-explanatory that one or more recording/playback drives and a transfer device for transporting the information carriers between the magazine(s) and the recording/playback drive(s) and only one holding compartment for an interchangeable magazine may be arranged in the apparatus.

Figs. 1, 2 and 6 show the preferred device 1 with several partially illustrated magazine holding compartments 2 and with an interchangeable magazine 3 shown schematically in the bottom holding compartment. In said compartments, the means 10, 11 for locking and releasing the interchangeable magazines are arranged on one of the walls, i.e. on one of the common, vertical side walls 20 of the holding compartments 2 and within the lateral guides for the interchangeable magazines. The locking/releasing means 10, 11 extend through openings 21 in the side wall 20 into the holding compartments 2 (Fig. 1) and are thus in a position, i. e. a locking or final closing position, in which the means 10, 11 are in engagement with the inserted interchangeable magazine(s) 3 (Figs. 1 and 6).

As shown in Fig. 1, the holding compartments 2 are formed by guide or support legs 22 which are arranged on the insides of the two side walls 20 and extend horizontally in the magazine loading direction, and by stop arms 23 which are arranged at the inner end X the guide legs and extend vertically. At their ends X', i. e. in the loading/unloading section of the holding compartments 2, the side walls 20 and the guide legs 22 have slopes to facilitate insertion of the interchangeable magazines 3.

The means 10, 11 for locking and releasing the interchangeable magazine 3 inserted into the loading/unloading section and the information carrier CD held in the interchangeable magazine are, as shown in Figs. 1 to 6, in operative connection with the housing door 4 and can be engaged and disengaged by a closing and opening movement of said door.

The locking and releasing means 10, 11 also exhibit means 10 for positioning the interchangeable magazine 3 which can also be engaged and disengaged by the closing and opening movement of the housing door 4, the positioning means 10 of the magazine and the releasing means 11 for the information carriers forming an integral, i.e. one-piece component of the magazine locking and releasing means 10, 11 (Fig. 1 and Figs. 4 to 6).

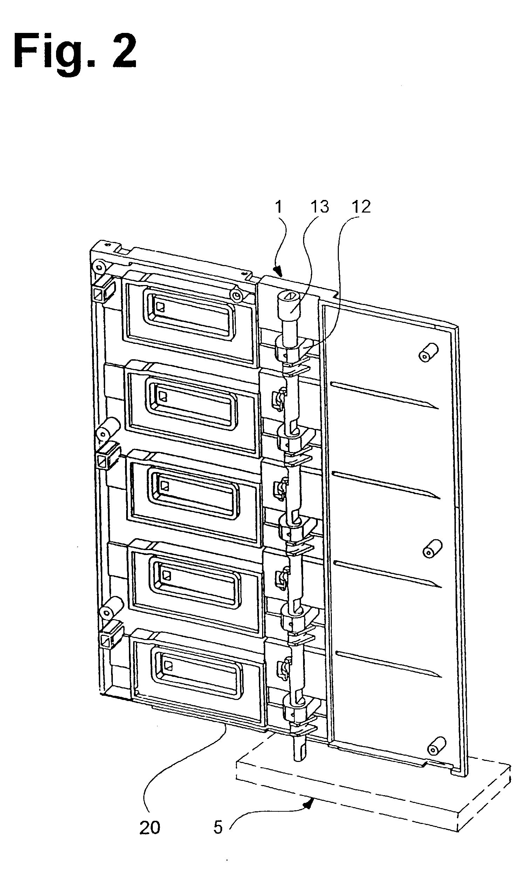

As shown in Figs. 2 and 6, the means 10, 11 for locking, releasing and positioning each holding compartment 2 are jointly mounted on a rotating shaft 13 of a crank drive 5 provided in the apparatus in the area of one outer side of side wall 20 so that the means 10, 11 are rigidly connected to each other between the individual holding compartments 2 and can be jointly actuated by said single crank drive 5 attached to the housing door 4.

The locking, releasing and positioning means 10, 11 which are associated with each holding compartment 2 and are mounted on the rotating shaft 13, each have the form of a cam disc 12 rotatable together with the shaft (see Figs. 1, 2, 4 to 6), said cam disc 12 having in its final closed position shown in Figs. 1, 2 and 6 a stop cam 10 for positioning and locking/releasing the interchangeable magazine 3 in an inner end position of the apparatus in the holding compartment 2, and a cam 11 for jointly releasing all the information carriers CD in the interchangeable magazine 3 by actuating an arresting device 30 on the interchangeable magazine.

The arresting device 30 of the interchangeable magazine 3 consists of an actuating rocker 30 which is mounted in a side wall of the interchangeable magazine 3 and can be pivoted about a vertical shaft. The actuating rocker has one end 31 extending out of the magazine and one end 32 extending into the magazine.

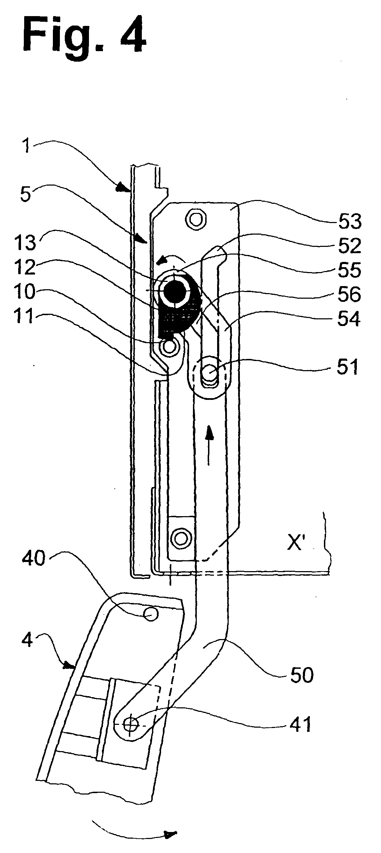

In an open end position of the housing door 4 shown in Fig. 4 and an open position shown in Fig. 5, in which the locking, releasing and positioning means 10, 11, 12 and the cam disc(s) 12 are not in engagement with the interchangeable magazine(s) 3, the actuating rocker 30 of the arresting device 30 is held in an initial position by a spring element (not shown) located in the pivot axis of the actuating rocker. In this position, the CD drawers 35 of the interchangeable magazine 3 which are in the inner end position in the magazine are locked by locking noses 33 on the end 32 of the actuating rocker 30 and by locking grooves 36 on a side edge of the drawer 35 to prevent any slipping out during loading and unloading of a magazine.

In the final closed position of the housing door 4 and of the locking/releasing and positioning means 10, 11, 12 shown in Fig. 6, the end 31 of the actuating rocker 30 of the interchangeable magazine 3 inserted into the holding compartment 2, which points to the back of the magazine and into the loading/unloading section X', respectively, is pivoted or pushed by an outer radial segment of the cam 11 on cam disc 12 towards the side wall of the magazine against the spring force of the spring element so that the locking noses 33 of actuating rocker 30 are disengaged from the locking grooves 36 of the drawers 35 and the drawers are released.

The locking and positioning of the interchangeable magazine 3 in the holding compartment 2 is performed by the stop cam 10 located in the outer radial segment of the cam 11, said stop cam acting on the end 31 of the actuating rocker 30 at the outside of the magazine in the direction of the loading movement of the interchangeable magazine 3 when the cam disc 12 rotates due to the closure of the housing door 4.

As shown in Figs. 2 to 6, the crank drive 5 of the device 1 is located on the lower end of the rotating shaft 13 on which the cam discs 12 are mounted and underneath the magazine holding compartments 2. The crank drive 5 has a bent-off crank arm 50 which is shiftable horizontally in the loading/unloading direction X/X' of the interchangeable magazine 3, one end of said arm being connected to the outer circumference of a crank 51 of the crank drive and the other end to the housing door 4 at a predetermined distance from the door hinge 40 so that it can pivot about a bearing pin 41.

By means of a guide pin 51 which is arranged at the first end of the crank arm 50 and points into the interior of the apparatus, the crank arm 50 is held in a guide slot 52 of a bearing plate 53 mounted in the apparatus and is thus guided during the shifting movement. In order to compensate tolerances in the crank arm movement, the guide slot 52 is bent-off towards the inside of the magazine holding compartments at its end facing into the apparatus.

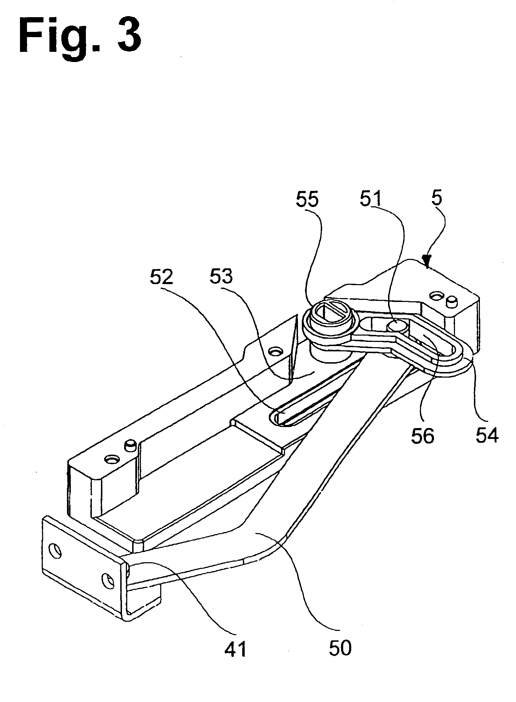

As shown in Figs. 3 to 6, the crank 54 is rigidly connected to the rotating shaft 31 of the cam discs 12 by a rotating bearing sleeve 55 arranged in the center of rotation. The crank 54 also takes the form of a bent-off crank lever 54 with a uniform, bent-off guide slot 42 into which the guide pin 51 of the crank arm 50 extends and is guided.

When the housing door 4 is closed, the crank 54 points towards the inside of the magazine holding compartments (Fig. 6) and when the housing door is partially or fully opened, it points towards the housing door or to the loading/unloading section X' (Fig. 4).

The method of operation of the device is as follows: Starting from an initial position as shown in Fig. 4, i. e. from the final open position in which the housing door 4 is completely open and the locking/releasing and positioning means 10, 11, 12 are disengaged, the interchangeable magazine(s) 3 is/are placed or pushed manually by an operator into the holding compartment(s).

The housing door 4 is then manually set into a pivoting movement for closing. During this operation, the housing door 4 pushes the crank arm 50 towards the inside of the apparatus until the guide pin 51 of the crank arm reaches the bent-off section of the guide slot 56 of the crank 54 as shown in Fig. 5. At this point the housing door 4 is about 30 degrees before its final closed position and the locking/releasing and positioning means have not yet engaged with the interchangeable magazine.

The rotating shaft 13 with the cam discs 12 and the locking/releasing and positioning means 10, 11 are then turned by the crank arm 50 and the crank lever 54 in anticlockwise direction or towards the interchangeable magazine 3 and against the actuating rocker 30 of the drawer arresting device of the magazine.

Shortly before the housing door 4 reaches its final closed position, i. e. the position according to Fig. 6, the locking/releasing and positioning means move into engagement, with the cam 11 of the cam disc 12 pressing against the end 31 of the actuating rocker 30 of the drawer arresting device towards the interchangeable magazine 3 and towards the side wall of the magazine, thus simultaneously releasing all the CD drawers 35 of the magazine. Almost simultaneously, the stop cam 10 of the cam disc 12 presses against the end 31 of the actuating rocker 30 and pushes the inserted magazine 3 which may not yet be in its end position in the apparatus up against the stop leg 23 in the magazine holding compartment 2, thus locking the interchangeable magazine 3 in the holding compartment 2 (see Figs. 1 and 6).

During a subsequent opening of the housing door 4 in order to remove one or more interchangeable magazines 3, the sequence of functions of the device 1 according to the invention is reversed.

In an alternative embodiment (not shown) of the device 1 according to the invention for locking/releasing and positioning, the stop cam 10 is movable relative to the cam 11 against a spring element of the cam disc 12 in a opposite direction oppsite to the direction of rotation of the cam 11 predetermined by the closing of the housing door 4.

Releasing of the drawers 35 by the cam 11 is thus effected after the positioning and locking of the interchangeable magazine 3 by the stop cam 10.
- CD: Information carrier
- X: End inside the apparatus (guide legs/magazine holding compartment)
- X': End outside the apparatus
- 1.: Device (for locking/releasing the interchangeable magazine)
- 2.: Holding compartment (in the apparatus/for interchangeable magazine)
- 3.: Interchangeable magazine (for information carrier)
- 4.: Housing door (loading/unloading section on the apparatus/for magazine)
- 5.: Crank drive (for means for locking/releasing)
- 10.: Means for locking/releasing, positioning of the magazine - stop cam (of the means/cam disc)
- 11.: Means for releasing/locking the information carrier - cam (of the means/cam disc)
- 12.: Cam disc (of the means for locking/releasing)
- 13.: Rotatable shaft (for cam disc/crank drive)
- 20.: Side wall (magazine holding compartment)
- 21.: Opening (in the side wall for locking/releasing means)
- 22.: Guide leg (for magazine/in magazine holding compartment)
- 23.: Stop arm (for magazine/in magazine holding compartment)
- 30.: Arresting device (for information carrier/on magazine) - actuating rocker (on magazine)
- 31.: End of actuating rocker outside of magazine (magazine)
- 32.: End of actuating rocker inside of magazine (magazine)
- 33.: Locking noses (actuating rocker)
- 34.:
- 35.: Drawer/plate holder (for information carrier/in magazine)
- 36.: Locking groove (side edge of drawer)
- 40.: Door hinge (housing door/on apparatus)
- 41.: Bearing pin (in housing door/for crank drive)
- 50.: Crank arm (crank drive)
- 51.: Guide pin (crank drive)
- 52.: Guide slot (bearing plate/crank drive)
- 53.: Bearing plate (crank drive)
- 54.: Crank
- 55.: Bearing sleeve (crank)
- 56.: Guide slot (crank/rotary crank lever)

## Claims

1. Device (1) with means (10, 11) for locking and releasing at least one interchangeable magazine (3) loaded into a holding compartment (2) of a loading/unloading section of a recording/playback apparatus and for jointly releasing and locking at least one removable information carrier (CD) held in the interchangeable magazine during locking and releasing of the interchangeable magazine, whereby the loading/unloading section can be closed by a housing door (4) of the apparatus, **characterized in that** the the means (10, 11) for locking and releasing the interchangeable magazine (3) inserted into the loading/unloading section and the information carriers (CD) contained in the interchangeable magazine are in operative connection with the housing door (4) and can be engaged and disengaged by a closing and opening movement of said door.

2. Device (1) in accordance with Claim 1, characterized in that means (10) for positioning the interchangeable magazine (3) are provided which can be engaged and disengaged by the closing and opening movement of the housing door (4).

3. Device (1) in accordance with Claims 1 and 2, characterized in that the means (10, 11) for locking, releasing and positioning are not in engagement with the interchangeable magazine (3) inserted into the loading/unloading section when the door (4) of the housing is in an open end position or is partially open,and
that the means (10, 11) for locking, releasing and positioning can be brought into engagement with the interchangeable magazine (3) and with an arresting device (30) for the information carrier (CD) arranged on the interchangeable magazine sequentially or jointly shortly before the housing door (4) reaches a final end position.

4. Device (1) in accordance with Claims 1, 2 and 3, characterized in that the positioning means (10) of the magazine and the releasing means (11) of the information carrier form a one-piece component of the magazine locking and releasing means (10, 11), and
that the means (10, 11) for locking, releasing and positioning each holding compartment (2) are located in the area of one of their side walls (20) and are rigidly connected between the individual holding compartments (2).

5. Device (1) in accordance with Claims 1 and 2 or 4, characterized in that the means (10, 11) for locking, releasing and positioning are jointly linked to the housing door (4) by a single crank drive (5) and are jointly actuated.

6. Device (1) in accordance with Claims 3, 4 or 5, characterized in that the means (10, 11) for locking, releasing and positioning which are associated with each holding compartment (2) each take the form of a rotatable cam disc (12),
that the cam disc (12) comprises a stop cam (10) for positioning and for locking/releasing the interchangeable magazine (3) in the holding compartment (2) in its end position in the apparatus, and
that the cam disc (12) comprises a cam (11) for jointly releasing all the information carriers (CD) in a interchangeable magazine (3) by actuating the arresting device (30).

7. Device (1) in accordance with Claim 6, characterized in that when rotating due to the closure of the housing door (4) the cam disc (12) acts with its outer radial segment of the cam (11) and with the stop cam (10) located in this area on the end (31) of a spring-loaded actuating rocker (30) of the arresting device (30).

8. Device (1) in accordance with Claim 6, characterized in that all cam discs (12) are mounted on a common rotating shaft (13) of the crank drive (5), said shaft being mounted in the apparatus.

9. Device (1) in accordance with Claim 5 or 8, characterized in that the crank drive (5) has a crank arm (50) which is shiftable in the loading direction of the interchangeable magazine (3), the first end of said arm being connected to the outer circumference of a crank (51) of the crank drive and the second end to the housing door (4) at a predetermined distance from the door hinge (40) so as to be pivotable.

10. Device (1) in accordance with Claims 1 to 9, characterized in that the information carrier (CD) can take the form of a compact disc (CD) with or without a protective sleeve, a magneto-optical disc (MO), a floppy disk (FD) or a music cassette (MC).

11. Device (1) in accordance with Claim 10, characterized in that the information carrier (CD) is held in the interchangeable magazine (3) by means of an extensible or an extensible and removable drawer (35) or by a disc holder (35).

12. Device (1) in accordance with Claim 7, characterized in that the stop cam (10) is movable relative to the cam (11) against a spring element in a direction opposite to the direction of rotation of the cam predetermined by the closing of the housing door (4).
